# DEMANDE DE BREVET EUROPEEN

(11) **EP 1 123 854 A1**
(43) Date de publication de la demande: **16.08.2001**
(21) Numéro de dépôt: 01400285.1
(22) Date de dépôt: 06.02.2001
(51) Int. Cl.: B62B 3/18

(54) **Chariot emboîtable adapté à recevoir des objets volumineux**

(30) Priorité: 10.02.2000 FR 0001658
(71) Demandeur: ATELIERS REUNIS CADDIE, F-67300 Schiltigheim (FR)
(72) Inventeur: Joseph, Alice, 67301 Schiltigheim Cedex (FR); Lemarchand, Alain, 67116 Reichstett (FR)
(74) Mandataire: CABINET BONNET-THIRION

(57) **Abrégé**

Chariot emboîtable, du genre comportant un châssis (11) constitué, d'une part, de deux montants latéraux (12) dont la partie supérieure supporte une poignée de préhension et une corbeille (14) et, d'autre part, d'un socle (13) supportant les montants latéraux (12) et des roues (16, 17), ledit chariot comportant par ailleurs un support d'objets (122), le socle (13) s'étendant pratiquement dans un plan horizontal et le support d'objets (122) étant monté articulé, par une de ses extrémités, par rapport au châssis du chariot (110) en sorte qu'il peut occuper deux positions, une position opérationnelle dans laquelle son autre extrémité est au plus à l'aplomb de la poignée de manoeuvre et une position relevée dans laquelle le support d'objets (122) disparaît pratiquement complètement sous la corbeille (14) : dans chacune desdites positions, le support d'objets (122) coopère avec des pions de butée (131) ou appuis (130) portés par le châssis (11) ; les pions de butée (131), l'axe d'articulation (126) du support d'objets (122) et les appuis (130) sont disposés axialement dans cet ordre depuis l'avant vers l'arrière du chariot (110).

## Description

La présente invention concerne un chariot emboîtable adapté à recevoir des objets volumineux.

Plus précisément, elle concerne un chariot emboîtable du genre de ceux mis à disposition de la clientèle dans les grandes surfaces.

Un tel chariot comporte généralement un châssis constitué, d'une part, de deux montants latéraux dont la partie supérieure supporte une poignée de préhension et une corbeille et, d'autre part, un socle supportant les montants latéraux et des roues, au moins une roue avant montée pivotante et deux roues arrière.

On a souvent cherché à équiper un tel chariot de moyens permettant le transport d'objets volumineux, souvent lourds, tels que caisses de boissons, sacs de pommes de terre ou autres, sans avoir à les soulever jusque dans la corbeille ; par ailleurs, de tels moyens permettent également d'accroître la surface de chargement du chariot, notamment lorsque la corbeille est de petit volume ou lorsque le socle est dépourvu de plateforme inférieure, généralement à l'avant du socle.

De nombreuses solutions ont été proposées.

Certaines consistent à faire porter un support d'objets par la corbeille, soit à l'avant, comme dans le document DE-A-32 08 691, soit à l'arrière, comme dans le document FR-A-2 530 570 ; ces solutions présentent l'inconvénient de réduire la visibilité lors de la manoeuvre du chariot ; par ailleurs, en cas de chute, les produits tombent d'une hauteur importante.

On a également proposé de placer un support d'objets sous la corbeille ; d'une façon générale, il s'agit d'une grille montée coulissante et/ou articulée, par rapport aux montants latéraux, juste sous la corbeille ; c'est le cas par exemple des chariots décrits dans les documents FR-A-2 645 487, FR-A-2 652 326, FR-A-2 665 133, EP-A-0141 398 ; les produits sont à une hauteur encore importante et, en arrière de la corbeille, gênent l'usager dans ses manoeuvres ; en outre, en position repliée, ces supports d'objets limitent l'emboîtement des chariots.

Dans le document EP-A-0751 057, le support d'objets est en deux parties, une partie fixe et une partie articulée sur les montants latéraux ; les objets sont à mi-hauteur entre le sol et le fond de la corbeille, mais une telle disposition présente également les inconvénients ci-dessus : gêne de l'usager et limitation de l'emboîtement.

L'invention a pour objet un chariot emboîtable équipé d'un support d'objets ne présentant pas ces inconvénients.

Selon l'invention, un chariot emboîtable, du genre comportant un châssis constitué, d'une part, de deux montants latéraux dont la partie supérieure supporte une poignée de préhension et une corbeille et, d'autre part, d'un socle supportant les montants latéraux et des roues, ledit chariot comportant par ailleurs un support d'objets, le socle s'étendant pratiquement dans un plan horizontal et le support d'objets étant monté articulé, par une de ses extrémités, par rapport au châssis du chariot en sorte qu'il peut occuper deux positions, une position opérationnelle dans laquelle son autre extrémité est au plus à l'aplomb de la poignée de manoeuvre et une position relevée dans laquelle le support d'objets disparaît pratiquement complètement sous le fond de la corbeille, est caractérisé par le fait que, dans chacune desdites positions, le support d'objets coopère avec des pions de butée ou appuis portés par le châssis.

Avantageusement, les pions de butée, l'axe d'articulation du support d'objets et les appuis sont disposés axialement dans cet ordre depuis l'avant vers l'arrière du chariot.

De préférence, le support d'objets est en fils soudés.

Avantageusement, le support d'objets comporte une ceinture de forme générale rectangulaire adaptée à coopérer en butée avec les appuis solidaires du châssis.

De préférence, les petits côtés de la ceinture sont localement déformés pour réaliser un U dirigé vers l'extérieur par lequel la ceinture coopère avec les appuis.

Avantageusement, la ceinture porte une traverse dont les extrémités libres constituent des demi-axes d'articulation.

De préférence, la ceinture supporte une épingle en U dont l'âme est placée vers l'arrière et relevée.

Avantageusement, le socle porte latéralement des trous dans lesquels sont introduits les demi-axes.

De préférence, la traverse est adaptée à coopérer en butée avec les pions de butée portés par le châssis.

Avantageusement, les demi-axes sont raccordés au reste de la traverse par des portions en U par lesquelles la traverse coopère avec les pions de butée.

De préférence, les portions en U de la traverse s'étendent dans un plan légèrement incliné par rapport au plan de la ceinture.

Avantageusement, les pions de butée, les trous recevant les demi-axes et les appuis sont aménagés sur une plaquette elle-même assujettie au châssis.

Avantageusement, les montants latéraux sont solidarisés au socle à l'extrémité arrière de celui-ci au voisinage de laquelle sont fixées deux jambes de force soutenant la corbeille et l'axe d'articulation du support d'objets est situé entre les jambes de force et les montants latéraux.

Avantageusement, la ceinture est adaptée à coopérer avec les jambes de force du chariot suivant lors de l'emboîtement de deux chariots.

Pour mieux faire comprendre l'objet de l'invention, on va en décrire maintenant, à titre d'exemple, purement illustratif et non limitatif, un mode de réalisation représenté sur les dessins annexés.

Sur ces dessins :
- la figure 1 est une vue partielle d'un chariot emboîtable selon l'invention, en coupe selon I-I de la figure 2, le support d'objets étant en position opérationnelle ;
- la figure 2 est une vue selon la flèche II de la figure 1 du châssis et du support d'objets seuls du chariot de la figure 1 ;
- la figure 3 est une vue analogue aux figures 1 et 4 montrant le passage du support d'objets de sa position opérationnelle à sa position relevée lors de l'emboîtement de deux chariots ;
- la figure 4 est une vue analogue à la figure 1, le support d'objets étant en position relevée.

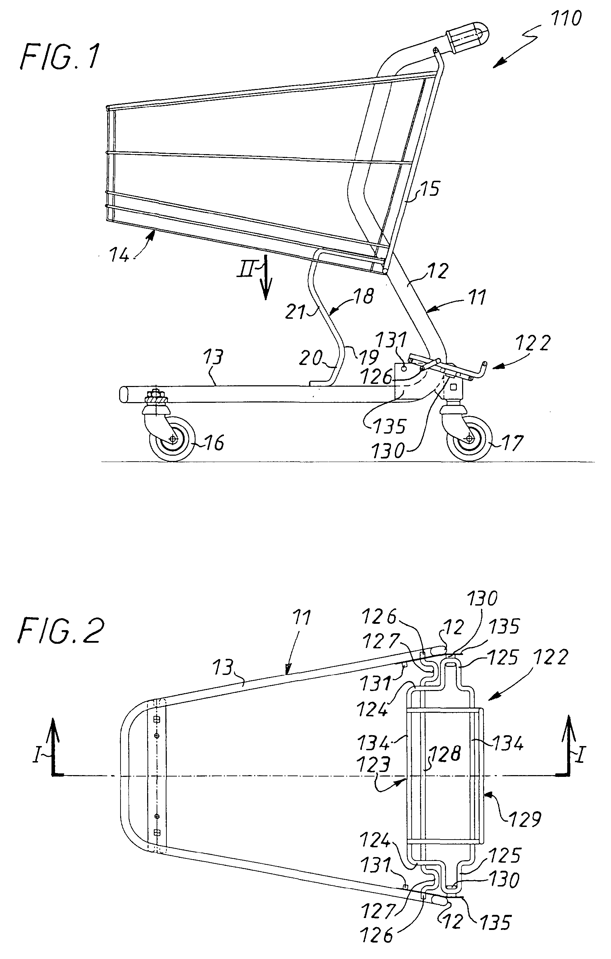

Le chariot 110 représenté sur la figure 1 comporte un châssis 11 constitué de deux montants latéraux 12 et d'un socle 13.

A leur extrémité supérieure, les montants latéraux 12 supportent une poignée de préhension ou barre de manoeuvre et, sous celle-ci, un panier ou corbeille 14, esquissée sur la figure 1, de forme générale classique, du genre pyramidale, ayant à l'arrière 15 une paroi arrière, non représentée, en forme de volet articulé à sa partie supérieure en sorte qu'il peut, comme on le sait, pivoter vers l'intérieur de la corbeille 14, poussé par l'avant de la corbeille du chariot qui suit, lors de l'emboîtement de deux tels chariots ; la corbeille 14 est solidaire par sa partie arrière des montants 12 en étant placée entre ceux-ci.

Le volet arrière supporte, ou non, un siège enfant.

Le socle 13 s'étend pratiquement dans un plan horizontal et est en forme de U ouvert vers l'arrière du chariot 110, les ailes du U n'étant pas parallèles mais plus éloignées l'une de l'autre à l'arrière du chariot qu'à l'avant ; ainsi, lors de l'emboîtement, les socles 13 peuvent s'encastrer les uns dans les autres.

A l'avant, le socle 13 supporte une (ou deux) roue(s) avant 16 et deux roues arrière 17.

Ici, le socle 13 et les montants latéraux 12 sont d'une seule pièce, obtenus par pliage d'un même tube, mais il pourrait en être autrement ; le socle 13 et les montants 12 pourraient être des pièces séparées assemblées, par exemple par soudage.

Chaque aile du U du socle 13 reçoit à fixation une extrémité d'une jambe de force 18 dont l'autre extrémité est fixée à la corbeille 14 ; en dehors de ses extrémités de fixation, la jambe de force 18 est coudée en 19 en sorte que sont définis deux brins, un brin inférieur 20 et un brin supérieur 21 ; les deux brins 20 et 21 sont inclinés, d'une part, l'un par rapport à l'autre et, d'autre part, par rapport à la verticale, la concavité du coude 19 étant tournée vers l'avant du chariot.

Les jambes de force 18 sont situées légèrement à l'avant par rapport aux montants latéraux 12.

Le chariot 110 est équipé d'un support d'objets 122 permettant notamment le transport d'objets volumineux, souvent lourds, tels que caisses de boissons ou autres, sans avoir à les soulever jusque dans la corbeille 14.

Le support d'objets 122 est monté par une de ses extrémités articulé sur le châssis 11 du chariot 110.

Ici, le support d'objets 122 est en fils soudés et comporte une ceinture 123 de forme générale rectangulaire dont les petits côtés 124 sont localement déformés pour réaliser un U 125 dirigé vers l'extérieur adapté, par exemple par son âme, à coopérer en butée avec un appui 130 solidaire du châssis 11; la ceinture 123 porte par ses petits côtés 124 une traverse 128 dont les extrémités libres constituent des demi-axes d'articulation 126 ; la ceinture 123 supporte également, par ses grands côtés 134, une épingle 129 en U, dont l'âme s'étend transversalement à l'arrière et est avantageusement relevée pour le calage des objets, dans le sens axial par rapport au chariot 110, c'est-à-dire dans la direction de déplacement du chariot 110.

Pour le montage à articulation du support d'objets 122, le châssis 11 porte latéralement, à l'arrière des jambes de force 18, globalement non loin des attaches au socle 13 des montants 12, des trous dans lesquels sont introduits les demi-axes 126 du support d'objets 122, lesquels trous sont situés en avant des appuis 130.

Les demi-axes 126 sont raccordés au reste de la traverse128 par des portions 127 en U adaptées à coopérer en butée avec des pions de butée 131 portés par le châssis 11 en avant des trous qui reçoivent les demi-axes 126 ; les U des portions 127 s'étendent dans un plan légèrement incliné par rapport au plan de la ceinture 123.

Dans la forme représentée, chaque pion 131, chaque appui 130 et chaque trou qui reçoit un demi-axe 126 sont aménagés sur une plaquette 135, avantageusement en tôle, elle-même assujettie au châssis 11, par exemple par les mêmes moyens que ceux qui solidarisent au châssis 11 les supports des roues arrière 17 ; les pions 131 et les appuis 130 peuvent être rapportés par soudage ou vissage sur les plaquettes 135.

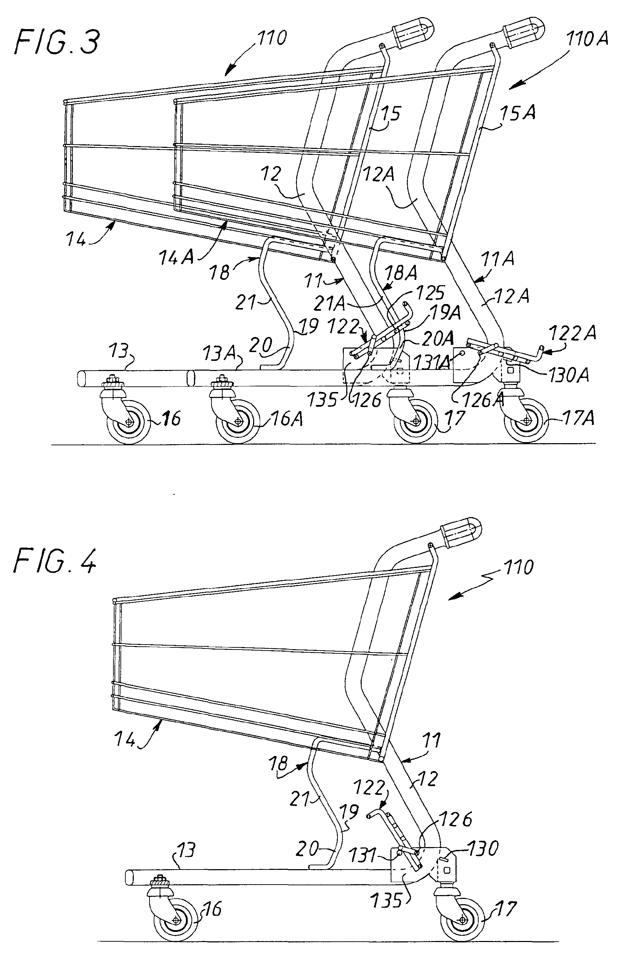

Grâce aux dispositions ci-dessus, en position opérationnelle, figures 1 et 2, le support d'objets 122 est en appui sur le socle 13 par sa ceinture 123, plus précisément par les U 125 qui reposent sur les appuis 130 ; en position non opérationnelle, c'est-à-dire en position relevée, figure 4, le support d'objets 122 est incliné vers l'avant du chariot 110 et repose sur les pions 131, par l'intermédiaire de sa traverse 128, plus précisément par l'intermédiaire des U des portions 127 de celle-ci.

On appréciera le faible encombrement du support d'objets 122 dans l'une et l'autre de ces positions ; en position opérationnelle, le support d'objets 122 est au plus à l'aplomb de la barre de manoeuvre du chariot 110, la ceinture 134 étant légèrement inclinée vers l'arrière du chariot 110, et, en position escamotée relevée, l'arrière du chariot 110 est complètement dégagé, le support d'objets 122 disparaissant quasiment complètement sous la corbeille 14, en étant dans une position proche de la verticale.

De plus, l'agencement est tel que le support d'objets 122 est automatiquement mis en position relevée, c'est-à-dire non opérationnelle, lors de l'emboîtement de deux tels chariots.

La figure 3 montre un tel relevage automatique du support d'objets 122 lors d'un tel emboîtement.

Sur cette figure, le chariot 110A, suivant le chariot 110, est emboîté dans le chariot 110; les composants du chariot 110A, identiques aux composants du chariot 110, portent la même référence suivie de la lettre A.

Dans un premier temps, les brins inférieurs 20A des jambes de force 18A du chariot 110A viennent au contact des ailes arrière des U 125 de la ceinture 123 du chariot 110, le long desquels celles-ci glissent en faisant tourner, par effet de came, le support d'objets 122 vers l'avant ; puis, les brins supérieurs 21A prennent le relais, accentuant ainsi la rotation du support d'objets 122 ; le chariot 110A continuant d'avancer, la rotation du support d'objets 122 se poursuit : au delà de sa position verticale, il tombe, par son propre poids, en appui contre les pions 131 du chariot 110, figure 4 ; malgré la présence du support d'objets 122, les deux chariots 110 et 110A sont emboîtables au maximum, les parties supérieures de leurs montants latéraux 12 et 12A étant très proches l'une de l'autre, pratiquement à se toucher.

## Revendications

1. Chariot emboîtable, du genre comportant un châssis (11) constitué, d'une part, de deux montants latéraux (12) dont la partie supérieure supporte une poignée de préhension et une corbeille (14) et, d'autre part, d'un socle (13) supportant les montants latéraux (12) et des roues (16, 17), ledit chariot comportant par ailleurs un support d'objets (122), le socle (13) s'étendant pratiquement dans un plan horizontal et le support d'objets (122) étant monté articulé, par une de ses extrémités, par rapport au châssis du chariot (110) en sorte qu'il peut occuper deux positions, une position opérationnelle dans laquelle son autre extrémité est au plus à l'aplomb de la poignée de manoeuvre et une position relevée dans laquelle le support d'objets (122) disparaît pratiquement complètement sous la corbeille (14), caractérisé par le fait que, dans chacune desdites positions, le support d'objets (122) coopère avec des pions de butée (131) ou appuis (130) portés par le châssis (11).

2. Chariot emboîtable selon la revendication 1, caractérisé par le fait que les pions de butée (131), l'axe d'articulation (126) du support d'objets (122) et les appuis (130) sont disposés axialement dans cet ordre depuis l'avant vers l'arrière du chariot (110).

3. Chariot emboîtable selon l'une des revendications 1 ou 2, caractérisé par le fait que le support d'objets (122) est en fils soudés.

4. Chariot emboîtable selon la revendication 3, caractérisé par le fait que le support d'objets (122) comporte une ceinture (123) de forme générale rectangulaire adaptée à coopérer en butée avec les appuis (130) solidaires du châssis (11).

5. Chariot emboîtable selon la revendication 4, caractérisé par le fait que les petits côtés (124) de la ceinture (123) sont localement déformés pour réaliser un U (125) dirigé vers l'extérieur par lequel la ceinture (123) coopère avec les appuis (130).

6. Chariot emboîtable selon l'une des revendications 4 ou 5, caractérisé par le fait que la ceinture (123) porte une traverse (128) dont les extrémités libres constituent des demi-axes d'articulation (126).

7. Chariot emboîtable selon l'une des revendications 4 à 6, caractérisé par le fait que la ceinture (123) supporte une épingle (129) en U dont l'âme est placée vers l'arrière et relevée.

8. Chariot emboîtable selon l'une des revendications 6 ou 7, caractérisé par le fait que le socle (13) porte latéralement des trous dans lesquels sont introduits les demi-axes (126).

9. Chariot emboîtable selon l'une des revendications 6 à 8, caractérisé par le fait que la traverse (128) est adaptée à coopérer en butée avec les pions de butée (131) portés par le châssis (11).

10. Chariot emboîtable selon la revendication 9, caractérisé par le fait que les demi-axes (126) sont raccordés au reste de la traverse (128) par des portions (127) en U par lesquelles la traverse (128) coopère avec les pions de butée (131).

11. Chariot emboîtable selon la revendication 10, caractérisé par le fait que les portions (127) en U de la traverse (128) s'étendent dans un plan légèrement incliné par rapport au plan de la ceinture (123).

12. Chariot emboîtable selon l'une des revendications 8 à 11, caractérisé par le fait que les pions de butée (131), les trous recevant les demi-axes (126) et les appuis (130) sont aménagés sur une plaquette (135) elle-même assujettie au châssis (11).

13. Chariot emboîtable selon l'une des revendications 1 à 12, dans lequel les montants latéraux (12) sont solidarisés au socle (13) à l'extrémité arrière de celui-ci au voisinage de laquelle sont fixées deux jambes de force (18) soutenant la corbeille (14), caractérisé par le fait que l'axe d'articulation du support d'objets (122) est situé entre les jambes de force (18) et les montants latéraux (12).

14. Chariot emboîtable selon l'une des revendications 4 à 12 prise en combinaison avec la revendication 13, caractérisé par le fait que la ceinture (123) est adaptée à coopérer avec les jambes de force (118A) du chariot suivant (110A) lors de l'emboîtement de deux chariots (110,110A).
